(19) Europäisches Patentamt
European Patent Office
Office européen des brevets

(11) EP 0 761 833 B1

(12) EUROPEAN PATENT SPECIFICATION

(45) Date of publication and mention of the grant of the patent:
**12.12.2001 Bulletin 2001/50**

(51) Int Cl.[7]: **C22C 19/00**, H01M 4/38

(21) Application number: **96113226.3**

(22) Date of filing: **17.08.1996**

# (54) Hydrogen occluding alloy and electrode made of the alloy

Wasserstoffeinlagerungslegierung und daraus hergestellte Elektrode

Alliage à occlusion d'hydrogène et électrode fait d'un tel alliage

(84) Designated Contracting States:
**CH DE FR GB IT LI NL SE**

(30) Priority: **21.08.1995 JP 23477195**
**25.10.1995 JP 27754495**
**25.04.1996 JP 10509296**
**25.04.1996 JP 10509696**

(43) Date of publication of application:
**12.03.1997 Bulletin 1997/11**

(73) Proprietor: **MITSUBISHI MATERIALS CORPORATION**
**Chiyoda-ku, Tokyo (JP)**

(72) Inventors:
- **Komada, Norikazu, c/o Sohgou-kenkyusho Omiya-shi, Saitama-ken (JP)**
- **Kakehashi, Shinichiro, c/o Sohgou-kenkyusho Omiya-shi, Saitama-ken (JP)**
- **Matsumoto, Mitsugu, c/o Sohgou-kenkyusho Omiya-shi, Saitama-ken (JP)**
- **Tamo, Yoshitaka, c/o Sohgou-kenkyusho Omiya-shi, Saitama-ken (JP)**

(74) Representative:
**Gille Hrabal Struck Neidlein Prop Roos**
**Patentanwälte**
**Brucknerstrasse 20**
**40593 Düsseldorf (DE)**

(56) References cited:
**EP-A- 0 503 686**

- **JOURNAL OF ALLOYS AND COMPOUNDS, vol. 231, no. 1, 15 December 1995, pages 392-396, XP000548070 LIU F - J ET AL: "SURFACE AND METALLOGRAPHIC MICROSTRUCTURE OF THE LA-ADDED AB2 COMPOUND (TI, ZR)(MNN, CR, NI)2"**
- **PATENT ABSTRACTS OF JAPAN vol. 94, no. 010 & JP-A-06 283169 (HITACHI CHEM CO LTD), 7 October 1994,**
- **PATENT ABSTRACTS OF JAPAN vol. 010, no. 099 (E-396), 16 April 1986 & JP-A-60 241652 (MATSUSHITA DENKI SANGYO KK), 30 November 1985,**
- **PATENT ABSTRACTS OF JAPAN vol. 94, no. 011 & JP-A-06 306413 (DAIDO STEEL CO LTD), 1 November 1994,**
- **PATENT ABSTRACTS OF JAPAN vol. 016, no. 508 (E-1282), 20 October 1992 & JP-A-04 188805 (SEIKO EPSON CORP), 7 July 1992,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 761 833 B1

## Description

Field of the Invention

The present invention relates to a hydrogen occluding alloy exhibiting significantly high hydrogen absorption and desorption rates and excellent initial activation during practical use, for example, as electrodes of batteries.

Background of the Invention

Hitherto, a variety of hydrogen occluding alloys have been suggested, as exemplified by a hydrogen occluding alloy disclosed recently in "INTERNATIONAL SYMPOSIUM REGARDING THE FOUNDATION AND APPLICATION OF METAL-HYDROGEN SYSTEMS", held on November 6 to 11, 1994, in Fujiyoshida, Japan (Journal of Alloys and Compounds, 1995; 231: 392-396).

The foregoing hydrogen occluding alloy is a Ni-Zr based alloy having a composition according to the formula:

$$Ti_{0.5-x/2}Zr_{0.5-x/2}La_xMn_{0.8}Cr_{0.8}Ni_{0.4},$$

in which x = 0.0 - 0.1. Such alloys have a two-phase structure comprising a main phase made of a Zr-Ni-Mn based alloy and a phase made of a La-Ni type alloy which is dispersively distributed along the grain boundary of the main phase, as illustrated in an enlarged schematic view of the structure in Fig. 3.

In the foregoing conventional hydrogen occluding alloy, the phase made of the La-Ni type alloy dissociates atmospheric hydrogen molecules ($H_2$) to form hydrogen atoms (H) by its catalytic action, and absorbs the dissociated hydrogen atoms at a rate higher than that of the main phase made of the Zr-Ni-Mn based alloy; thus the absorption of the hydrogen atoms in the main phase made of the Zr-Ni-Mn based alloy is carried out mainly through the phase made of the La-Ni type alloy; and the hydrogen desorption is carried out by a function contrary to the foregoing function.

In addition, the foregoing conventional hydrogen occluding alloy can be made by preparing a Ni-Zr based liquid alloy having the foregoing composition, casting it into an ingot, and annealing the ingot for homogenization at a predetermined temperature within the range from 950 to 1,050 °C for a predetermined time in a non-oxidizing atmosphere, such as vacuum or inert gas.

In general, when the hydrogen occluding alloy is applied to an electrode of a battery, the battery can serve a practical use after an initial activation treatment in which charge/discharge cycles are repeated until the electrode including the hydrogen occluding alloy has a sufficient discharge capacity, in other words, until the discharge capacity caused by the hydrogen occluding alloy reaches near its maximum.

Objects of the Invention

Meanwhile, there recently has been a great demand for large output, good performance, and energy saving with respect to batteries and heat pumps to which the hydrogen occluding alloy is widely applied. Therefore, there is a need for a hydrogen occluding alloy which has higher hydrogen absorption/desorption rates and a shorter initial activation time as compared with conventional hydrogen occluding alloys.

Summary of the Invention

In the above viewpoint, the inventors of the present invention hereby provide hydrogen occluding alloys having improved hydrogen absorption/desorption rates and initial activation time according to the following descriptions (a) and (b):

(a) A hydrogen occluding alloy comprising (all percentages herein, unless specified otherwise, are weight percentages):

25% to 45% of Zr, 1% to 12% of Ti,
10% to 20% of Mn, 2% to 12% of V,
0.5 to 5% of at least one rare earth element, preferably comprising La and/or Ce, preferably consisting of 50% or more of La and/or Ce, and more preferably, consisting essentially of La and/or Ce,
optionally 0.1% to 4% of Hf,
and the balance being Ni (25% or more of Ni) and unavoidable impurities,

preferably comprising:

25% to 40% of Zr, 4% to 12% of Ti,
10% to 20% of Mn, 2% to 8% of V,
0.5% to 5% of La and/or Ce,
optionally 0.1% to 2% of Hf,
and the balance being Ni (25% or more of Ni) and unavoidable impurities,

more preferably comprising:

30% to 37% of Zr, 5% to 10% of Ti,
14% to 18% of Mn, 3% to 6% of V,
2% to 4% of La and/or Ce,
optionally 1% to 1.7% of Hf,
and the balance being Ni (25% or more of Ni) and unavoidable impurities,

is obtained by mixing and melting Ni, Zr, Ti, Mn, V and rare earth element (and optionally Hf) and casting to obtain ingots. By a subsequent homogenizing heat treatment at a temperature within the range of from 900 °C to 1100 °C, for a period of not less than 1 hour, the ingots are provided with a structure comprising a main phase made of a Zr-Ni-Mn based alloy and a phase made of a rare earth element-Ni type alloy dispersively distributed along the grain boundary of the main phase. Further, following the foregoing homogenizing heat treatment, hydrogenation is carried out by heating in the range of from 400°C to 900°C for a period of not less than 30 minutes in a pressurized hydrogen atmosphere in the range of from 1 to 11 atm. (optionally followed by cooling--this cooling step is generally not necessary and can be omitted if desired). As a result, the phase made of a rare earth element-Ni type alloy preferentially reacts with the atmospheric hydrogen and changes to a hydride product phase comprising a rare earth element hydride and a rare earth element-Ni type alloy. Since the hydride product phase exhibits larger thermal expansion as compared with the main phase made of the Zr-Ni-Mn based alloy, numerous cracks starting from the hydride product phase are formed in the main phase such that the hydride product phase is exposed on the surfaces of the cracks.

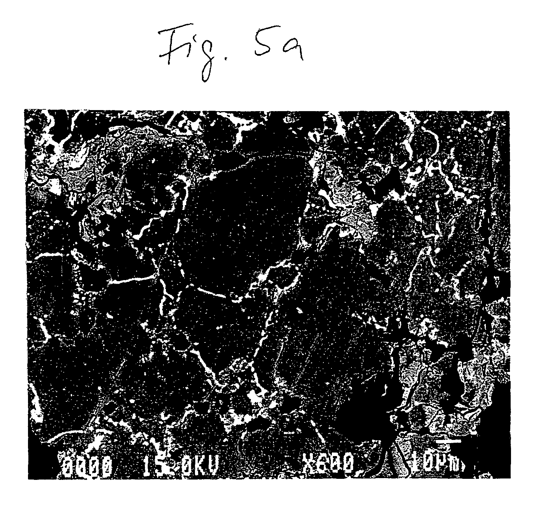

The ingot is next subjected to a dehydrogenation step comprising holding the ingot in an atmosphere maintained at a temperature in the range of from 600 to 700 °C and a vacuum pressure (not greater than 10 Torr). During this dehydrogenation step, rare earth element hydride in the hydride product phase changes to rare earth element, and the new born rare earth element reacts with the coexisting rare earth element-Ni type alloy to form a regenerated phase made of the rare earth element-Ni type alloy. Since the phase made of the rare earth element-Ni type alloy is fluidized during the regeneration, the phase distributes expansively along the cracks. As a result, there is obtained a structure comprising a main phase 11 made of the Zr-Ni-Mn based alloy, numerous cracks 12 formed during hydrogenation of the rare earth element-Ni type alloy, and a regenerated phase 13 made of a rare earth element-Ni type alloy phase being distributed as a result of flowing along the cracks during the dehydrogenation step, as shown in Figs. 1 and 2 which are enlarged schematic views, and in Fig. 5, which is an SEM picture, of the structure of the alloy of an embodiment in accordance with the present invention. in Fig. 5, there are identified a piece of main phase 11, a piece of regenerated phase 13 (which is white), and a crack 12 (just under another piece of white regenerated phase).

(b) In the Zr-Ni-Mn based alloy described in (a), the regenerated phase made of the rare earth element-Ni alloy as one component catalytically dissociates atmospheric hydrogen molecules ($H_2$) to form hydrogen atoms (H), and absorbs the dissociated hydrogen atoms at a higher rate as compared with the main phase made of the Zr-Ni-Mn based alloy. Thus, the hydrogen absorption in the main phase is carried out mainly through the regenerated phase made of the rare earth element-Ni type alloy and the desorption is carried out by the function contrary to the foregoing function. since the regenerated phase made of the rare earth element-Ni type alloy flows expansively along the numerous cracks, the effective area significantly increases. Thus, the regenerated phase can absorb and desorb hydrogen atoms at rates higher than those of the conventional hydrogen occluding alloy. Further, initial activation is significantly promoted because the absorption of hydrogen atoms at the initial activation is carried out through the regenerated Phase made of the rare earth element-Ni type alloy having such large effective area.

In accordance with the present invention as described in (a) and (b) above, the hydrogenation step can be conducted immediately after the homogenization step, with or without cooling. Alternatively, the hydrogenation step can be conducted any time after the homogenization step, i.e., with a time period between the two steps. For example, if desired, the ingot can be cooled e.g., to room temperature between the two steps, or the ingot can be transferred directly from the homogenization step to the hydrogenation step without cooling.

As mentioned above, the matrix phases of the alloys in accordance with the present invention as described above in (a) and (b) have numerous cracks. These cracks are generally of varying size, and the matrix phase has at least about 100 cracks having a major dimension which exceeds 0.1 micrometers per square millimeter.
The present invention was achieved based on the results set forth above, and is characterized by a hydrogen occluding alloy exhibiting high hydrogen absorption and desorption rates and excellent initial activation. The hydrogen occluding alloy has a composition comprising:

25% to 45% of Zr, 1% to 12% of Ti,
10% to 20% of Mn, 2% to 12% of V,
0.5 to 5% of at least one rare earth element, preferably comprising La and/or Ce, preferably consisting of 50% or more of La and/or Ce, and more preferably, consisting essentially of La and/or Ce,
optionally 0.1% to 4% of Hf,
and the balance being Ni (25% or more of Ni) and unavoidable impurities,

preferably comprising:

25% to 40% of Zr, 4% to 12% of Ti,
10% to 20% of Mn, 2% to 8% of V,
0.5% to 5% of La and/or Ce,
optionally 0.1% to 2% of Hf,
and the balance being Ni (25% or more of Ni) and unavoidable impurities,

and more preferably comprising:

30% to 37% of Zr, 5% to 10% of Ti,
14% to 18% of Mn, 3% to 6% Of V,
2% to 4% of La and/or Ce,
optionally 1% to 1.7% of Hf,
and the balance being Ni (25% or more of Ni) and unavoidable impurities;

and has a structure comprising:

a main phase made of a Zr-Ni-Mn based alloy,
numerous cracks formed at the time when the rare earth element hydride is generated, and
a regenerated phase made of a rare earth element-Ni type alloy being exposed on the surfaces of the cracks.

"Zr-Ni-Mn based alloy" refers to an alloy whose approximate formula is $(Zr, Ti)(Ni, Mn, V)_2$.
As used herein, "rare earth element(s)-Ni type alloy" (or, e.g., "La-Ni type alloy") refers to an alloy which may include small amounts of materials other than rare earth element and Ni, e.g., a suitable rare earth element(s)-Ni type alloy may consist of 71.0 - 78.6 % La, 21.2 - 28.8 % Ni, and < 0.4 % other materials.
The reason the composition of the hydrogen occluding alloy according to the present invention is limited to the foregoing ranges will now be described.

(a) Zr

The Zr component forms the main phase in association with Ni and Mn to increase the amount of the hydrogen occluded as described above. When the Zr content is less than 25%, the desired amount of hydrogen cannot be occluded. Whereas, if the content exceeds 45%, the amount of hydrogen occluded by the alloy decreases. Therefore, the Zr content is determined to be 25% to 45%, preferably 25% to 40% and more preferably 30% to 37%.

(b) Ti

The Ti component, dissolved in the main phase set forth above, lowers the equilibrium pressure for dissociating hydrogen to a level lower than the atmospheric pressure at room temperature, for example, so that the component promotes the hydrogen absorption/desorption and increases the amount of hydrogen occluded. If the Ti content is less than 1%, the desired effect as set forth above cannot be achieved. on the other hand, when the content exceeds 12%, the equilibrium pressure for dissociating hydrogen is again raised to, for example, a level higher than the atmospheric pressure at room temperature. As a result, the hydrogen absorption/desorption decreases. Therefore, the Ti content is determined to be 1% to 12%, and preferably 4% to 12% and more preferably 5% to 10%.

(c) Mn

The Mn component forms the main phase made of the Zr-Ni-Mn based alloy which occludes hydrogen as set forth above. When the Mn content is less than 10%, the main phase does not achieve the desired hydrogen-occluding capacity, whereas an Mn content over 20% suppresses the hydrogen absorption/desorption capability. Therefore, the content is determined to be 10% to 20%, and preferably, 14% to 18%.

(d) V

The V component dissolved in the main phase stabilizes absorption/desorption of hydrogen by adjusting the equilibrium pressure for dissociating hydrogen and increases the quantity of occluded hydrogen. If the V content is less than 2%, the desired effect set forth above cannot be achieved, whereas a content exceeding 12% does not bring about further improvement in such effects. Therefore, the content is determined to be 2% to 12%, and preferably 2% to 8% and more preferably 3% to 6%.

(e) Rare earth element(s)

This component(s) is/are essential for the formation of the regenerated phase made of the rare earth element-Ni type alloy which dissociates to absorb atmospheric hydrogen at a higher rate than that of the main phase and desorbs to recombine hydrogen to the atmosphere, as described above. If the content is less than 0.5%, the resulting amount of the regenerated phase made of the rare earth element-Ni type alloy is too small to maintain such functions. On the other hand, since a content exceeding 5% causes an excessive amount of the phase made of the regenerated rare earth element-Ni type alloy, the amount of hydrogen that can be occluded into the overall alloy decreases unsatisfactorily. Therefore, the content is determined to be 0.5% to 5% and preferably 2% to 4%.

To enhance the effects of the rare earth element-Ni type alloy and the regenerated phase made of the rare earth element-Ni type alloy, it is preferred that the rare earth element comprises La and/or Ce, preferably consists of 50% or more of La and/or Ce, and more preferably, consists essentially of La and/or Ce.

(f) Hf

The Hf content (Hf is optional), when present, which forms a main phase made of a Zr-Ni-Mn based alloy along with the Zr component, enhances the effects set forth above. If the Hf content is less than 0.1%, the desired effect cannot be obtained, whereas if the content exceeds 4%, the above function of the Zr content is impaired. Therefore, when Hf is present, the content is determined to be 0.1% to 4%, preferably 0.1% to 2% and more preferably 1% to 1.7%.

(g) Ni

If the Ni content is less than 25%, rare earth element-Ni type alloy and the regenerated rare earth element-Ni type alloy cannot be sufficiently formed. Since such alloy does not exhibit a desired hydrogen discharge rate and initial activation, the content is determined to be at least 25%.

The hydrogen occluding alloy in accordance with the present invention can be used as powder having a predetermined particle size by any conventional mechanical pulverization. In addition, the alloy can also be pulverized by a hydrogenation process in which hydrogen is absorbed at a given temperature ranging from 10 to 200 °C and desorbed by evacuation.

Brief Description of the Figures

Fig. 1 is an enlarged schematic view of the structure of hydrogen occluding alloys 1 to 13, 33 to 53, 93 and 94, with no Hf, in accordance with the present invention;
Fig. 2 is an enlarged schematic view of the structure of hydrogen occluding alloys 14 to 32, 54 to 92, 95 and 96, with Hf, in accordance with the present invention;
Fig. 3 is an enlarged schematic view of the structure of a conventional hydrogen occluding alloy;
Fig. 4 is a schematic view of the apparatus used for measuring the hydrogen absorption/desorption rates of the hydrogen occluding alloy; and

Fig. 5 is an SEM picture of a hydrogen occluding alloy in accordance with embodiment (a), discussed above. Fig. 5a is an original photograph of the SEM picture.

Detailed Description of Preferred Embodiments

The hydrogen occluding alloy in accordance with the present invention will now be described in further detail by an embodiment.

In an ordinary high-frequency induction melting furnace, Ni, Zr, Ti, Mn, V, La, Ce, Cr and Hf, as well as misch metal, each having a purity higher than 99.9%, are melted in an Ar atmosphere to prepare alloys having compositions as shown in Tables 1, 3, 5, 7, 9, 11, 13 and 15. Each alloy is cast in a water-cooled copper casting mold to be formed into an ingot. Each of the ingots is heated for homogenization under vacuum at a predetermined temperature within the range of from 900°C to 1100°C for 20 hours.

After the ingot is maintained at room temperature for 1 hour in a hydrogen atmosphere of a pressure in the range of from 1 to 1.2 atm., it is heated to a predetermined temperature within a range of from 600°C to 700°C and subjected to a hydrogenation treatment at the predetermined temperature for 30 minutes, so that the phase made of the rare earth element-Ni type alloy, which distributes along the grain boundary of the main phase made of the Zr-Ni-Mn based alloy, is converted into the hydride product phase mainly including rare earth element hydride and the rare earth element-Ni type alloy, where numerous cracks start from the hydride product phase. While holding the hydrogenation temperature set forth above, the ingot is subjected to dehydrogenation while evacuating until reaching a vacuum of $10^{-5}$ Torr, so that the phase made of the rare earth element-Ni type alloy is regenerated from the hydride product phase, Since the product is fluidized during the dehydrogenation process, the phase made of the regenerated rare earth element-Ni type alloy distributes expansively along numerous cracks as shown in Fig. 1 and 2. In such a way, hydrogen occluding alloys 1 to 92 in accordance with the present invention (hereinafter called "alloys of the present invention") are prepared. Alloys 93-96 are prepared in a similar way, except that after the hydrogenation step, they are cooled.

For comparison, comparative hydrogen occluding alloys having compositions as shown in Tables 3, 5, 9 and 15 are prepared under the same conditions as those described above, except that the hydrogenation and dehydrogenation processes following the homogenizing heat treatment are omitted.

The comparative alloy has a structure consisting of a matrix phase 21 made of a Zr-Ni-Mn based alloy and a dispersed phase 23 made of an La-Ni type alloy and distributed along the grain boundary 22 of the matrix phase, as shown in Fig. 3.

Then, the hydrogen absorption rate and the hydrogen desorption rate of each of the alloys 1 to 96 of the present invention and the comparative alloys are measured in accordance with JIS·H7202 "Method for Measuring Hydrogenation Rate of Hydrogen Occluding Alloy".

Prior to the measurement, alloys 1 to 96 of the present invention and the comparative alloys are respectively enclosed in a pressure container and subjected to hydrogenation pulverization including hydrogen absorption in a hydrogen atmosphere of 8 atm. at 200 °c for one hour, and the hydrogen desorption by evacuation to prepare powders having a particle size of 200 mesh or less.

First, the hydrogen-absorption rate is, as illustrated in a schematic view in Fig. 4, measured as follows:

(a) Powder is enclosed in a container 41 immersed in a (oil or water) bath 42, then a valve Vb is closed and valves Va and Vc are opened while maintaining the temperature in the bath at 200°C in order to introduce pressurized hydrogen into the system from a hydrogen cylinder 43. When the pressure in the system reaches 30 atm., the valve Va is closed and the system is then allowed to stand until the pressure in the system *decreases* to a predetermined level (until the hydrogen absorption is completed). Thus, the powder is initially activated.

(b) After the pressure in the system decreases to a predetermined level (around 20 atm.), the valve Vb is opened, followed by lowering the pressure in the system to $10^{-2}$ Torr by a vacuum pump 44. The bath temperature is lowered to 20°C and the valves Vb and Vc are closed and the valve Va is opened to introduce hydrogen into the system, except for the container. When the pressure is raised to 30 atm., the valve Va is closed and the valve Vc is opened. In such a state, the pressure drop in the system with respect to time is measured. The quantity of occluded hydrogen at the point when the quantity of hydrogen occluded by powder reaches 80%, and time taken to the foregoing moment are obtained from the pressure-drop curve so that (the quantity of occluded hydrogen when the occlusion of 80 % is realized)/(the time taken to realize the occlusion of 80%) is calculated. The thus-obtained value is defined as the hydrogen absorption rate.

The hydrogen desorption rate is determined by the following procedure: The bath is maintained at a temperature of, for example, 120°C, appropriate for hydrogen desorption within a range of from 100°C to 300°C in a state in which the measurement of the hydrogen absorption rate has been completed, that is, in a state in which the valves Va and Vb are closed, the valve Vc is opened, and the pressure in the system reaches a predetermined level (usually around 20 atm.). Then, the valve Vb is opened and the valve Vc is closed, and in the foregoing state, the pressure in the system, except for the container 41, is lowered to $10^{-2}$ Torr. Then, the valve Vb is closed and the valve Vc is opened, and in this state, the pressure rise in the system with respect to time is measured. The quantity of desorbed hydrogen at the point when the quantity of hydrogen desorbed from powder reaches 80%, and time taken to the foregoing moment are obtained from the pressure-rise curve so that (the quantity of desorbed hydrogen when the desorption of 80% is realized)/(the time taken to realize the desorption of 80%) is calculated. The thus-obtained value is defined as the hydrogen desorption rate. The results are shown in Tables 2, 4, 6, 8, 10, 12, 14 and 16.

For the purpose of evaluating the initial activation of alloys 1 to 96 of the present invention and conventional alloy, each alloy is used for an active material of a battery in the powder state, and the battery is subjected to repeated charge/discharge cycles until the battery shows a maximum discharge capacity as shown below in detail. The initial activation is taken as the number of charge/discharge cycles at which the discharge capacity corresponds to 95% of the maximum discharge capacity.

The conventional alloy is roughly crushed to form coarse particles of 2 mm or less in diameter with a jaw crusher, and each of alloys 1 to 96 of the present invention and roughly crushed conventional alloy is finely ground to 200 mesh or less with a ball mill. After water, polytetrafluoroethylene (PTFE) as a binder and carboxymethyl cellulose (CMC) as a thickener are added into each powder to obtain a paste, the paste is loaded on a commercial foamed nickel plate having a porosity of 95%. The foamed nickel plate is dried, pressed, and shaped into a cut plate of 30 by 40 mm having a thickness of 0.40 to 0.43 mm. The amount of the loaded active material is approximately 1.8 g. A nickel thin plate as a lead is welded at a side of the cut plate to form a negative electrode. On the other hand, a positive electrode is formed by preparing a paste from $Ni(OH)_2$ as an active material, water, polytetrafluoroethylene (PTFE) as a binder and carboxymethyl cellulose (CMC) as a thickener; loading the paste on the foamed nickel plate; drying, pressing and shaping the foamed nickel plate into a cut plate of 30 by 40 mm having a thickness of 0.71 to 0.73 mm; and welding the nickel thin plate at a side of the cut plate. The positive electrodes are provided at both sides of the negative electrodes through separators made of a polypropylene/polyethylene copolymer, and, protecting plates made of polyvinyl chloride *are* integrated therewith at both sides of the positive electrodes to prevent the omission of the active material from the outside of the positive electrodes.

- 1 The battery, whose electrode has component composition shown in samples 1-13, is fabricated by inserting thus-obtained integrated electrodes into a cell made of polyvinyl chloride and pouring a 35% KOH aqueous solution, as an electrolyte solution, into the cell.

  The resultant battery is subjected to charge/discharge cycles under conditions of a charging rate of 0.20 C, a discharging rate of 0.20 C and a quantity of charged capacity corresponding to 135% of the negative electrode capacity. The charge/discharge cycles are repeated until the battery exhibits the maximum discharge capacity, in which one cycle of charge and discharge is counted as one charge/discharge.

  Tables 2 and 4 show the maximum discharge capacity obtained by the procedure set forth above, as well as the number of charge/discharge cycles as a measure evaluating the initial activation, at which the discharge capacity is 95% of the maximum discharge capacity.
- 2 The battery, whose electrodes have component compositions shown in samples 14-32, is fabricated by inserting thus-obtained integrated electrodes into a cell made of polyvinyl chloride and pouring a 35% KOH aqueous solution, as an electrolyte solution, into the cell.

  The resulting battery is subjected to charge/discharge cycles under conditions of a charging rate of 0.20 C a discharging rate of 0.22 C, and a quantity of charged capacity corresponding to 135% of the negative electrode capacity. The charge/discharge cycles are repeated until the battery exhibits the maximum discharge capacity, in which one cycle of charge and discharge is counted as one charge/discharge.

  Tables 4 and 6 show the maximum discharge capacity obtained by the procedure set forth above, as well as the number of charge/discharge cycles as a measure evaluating the initial activation, at which the discharge capacity is 95% of the maximum discharge capacity.
- 3 The battery, whose electrodes have component compositions shown in samples 33-92, is fabricated by inserting thus-obtained integrated electrodes into a cell made of polyvinyl chloride and pouring a 30% KOH aqueous solution, as an electrolyte solution, into the cell.

  The resulting battery is subjected to charge/discharge cycles under conditions of a charging rate of 0.15 C, a discharging rate of 0.15 C, and a quantity of charged capacity corresponding to 135% of the negative electrode capacity. The charge/discharge cycles are repeated until the battery exhibits the maximum discharge capacity, in which one cycle of charge and discharge is counted as one charge/discharge.

  Tables 6, 8, 10, 12, 14 and 16 show the maximum discharge capacity obtained by the procedure set forth above, as well as the number of charge/discharge cycles as a measure evaluating the initial activation, at which the discharge capacity is 95% of the maximum discharge capacity.

- 4 The battery, whose electrodes have component compositions shown in samples 93-96, is fabricated by inserting thus-obtained integrated electrodes into a cell made of polyvinyl chloride and pouring a 30% KOH aqueous solution, as an electrolyte solution, into the cell.

The resulting battery is subjected to charge/discharge cycles under conditions of a charging rate of 0.15 C, a discharging rate of 0.15 C, and a quantity of charged capacity corresponding to 135% of the negative electrode capacity. The charge/discharge cycles are repeated until the battery exhibits the maximum discharge capacity, in which one cycle of charge and discharge is counted as one charge/discharge.

Table 16 shows the maximum discharge capacity obtained by the procedure set forth .above, as well as the number of charge/discharge cycles as a measure evaluating the initial activation, at which the discharge capacity is 95% of the maximum discharge capacity.

Results in Tables 2, 4, 6, 8, 10, 12, 14 and 16 evidently demonstrate that each of alloys 1 to 96 of the present invention exhibits higher hydrogen absorption and desorption rates by the effect of the regenerated phase made of the rare earth element-Ni type alloy having a wide effective area since the phase distributes expansively while flowing along numerous cracks, compared with the conventional alloy having the phase made of the La-Ni type alloy dispersively distributed along grains, resulting in an improvement in the initial activity.

As described above, since the hydrogen occluding alloy in accordance with the present invention exhibits significantly high hydrogen absorption/desorption rates, and excellent initial activity, it significantly contributes to the achievement of high output, high performance, and energy savings in various mechanical apparatuses.

TABLE 1

| Sample No. | Component Composition (wt%) | | | | | | | | | |
|---|---|---|---|---|---|---|---|---|---|---|
| | Zr | Ti | Mn | V | Rare Earth Elements | | | | Hf | Ni+ impurity |
| | | | | | La | Ce | Pr | Nd | | |
| 1 | 30.1 | 6.2 | 15.8 | 5.0 | -- | 3.3 | -- | -- | -- | Bal. |
| 2 | 34.3 | 5.6 | 16.0 | 4.9 | 3.0 | -- | -- | -- | -- | Bal. |
| 3 | 36.9 | 5.1 | 16.2 | 5.0 | 1.6 | 1.4 | -- | -- | -- | Bal. |
| 4 | 34.4 | 9.8 | 15.9 | 5.1 | 2.9 | -- | -- | -- | -- | Bal. |
| 5 | 34.9 | 5.9 | 10.4 | 4.7 | 2.8 | -- | -- | -- | -- | Bal. |
| 6 | 34.1 | 6.2 | 17.9 | 4.9 | -- | 3.1 | -- | -- | -- | Bal. |
| 7 | 35.3 | 5.8 | 19.8 | 5.1 | -- | 3.5 | -- | -- | -- | Bal. |
| 8 | 34.6 | 6.0 | 16.2 | 2.8 | 1.6 | 1.3 | -- | -- | -- | Bal. |
| 9 | 34.2 | 5.8 | 16.0 | 5.2 | 0.54 | -- | -- | -- | -- | Bal. |
| 10 | 34.1 | 5.9 | 15.9 | 4.9 | -- | 0.53 | -- | -- | -- | Bal. |
| 11 | 34.4 | 5.7 | 15.8 | 4.7 | 2.0 | -- | -- | -- | -- | Bal. |
| 12 | 34.8 | 5.8 | 15.9 | 4.8 | -- | 4.9 | -- | -- | -- | Bal. |

Bal.: Balance

TABLE 2

| Sample No. | Hydrogen Absorption Speed (wt%/SEC) | Hydrogen Discharge Speed (wt%/SEC) | Electric Discharge Capacity (mAh/g) | Electric Charge and Discharge Cycles (time) |
|---|---|---|---|---|
| 1 | 0.20 | 0.19 | 401 | 2 |
| 2 | 0.21 | 0.20 | 419 | 1 |
| 3 | 0.19 | 0.19 | 421 | 2 |
| 4 | 0.21 | 0.21 | 419 | 2 |
| 5 | 0.19 | 0.19 | 417 | 1 |
| 6 | 0.19 | 0.20 | 418 | 2 |
| 7 | 0.18 | 0.19 | 420 | 2 |
| 8 | 0.21 | 0.20 | 416 | 2 |
| 9 | 0.17 | 0.18 | 425 | 4 |
| 10 | 0.17 | 0.17 | 423 | 4 |
| 11 | 0.19 | 0.20 | 422 | 3 |
| 12 | 0.22 | 0.21 | 419 | 2 |

TABLE 3

| Sample No. | Component Composition (wt%) | | | | | | | | | |
|---|---|---|---|---|---|---|---|---|---|---|
| | Zr | Ti | Mn | V | Rare Earth Elements | | | | Hf | Ni+ impurity |
| | | | | | La | Ce | Pr | Nd | | |
| 13 | 35.7 | 6.2 | 16.3 | 5.1 | 2.4 | 2.6 | -- | -- | -- | Bal. |
| COM-1 | 21.8 | 12.9 | 24.7 | -- | 3.8 | Cr:23.5 | -- | -- | -- | Bal. |
| 14 | 25.0 | 6.2 | 15.9 | 4.9 | 1.5 | 1.7 | -- | -- | 1.5 | Bal. |
| 15 | 29.9 | 6.1 | 15.9 | 5.0 | 1.6 | 1.6 | -- | -- | 1.6 | Bal. |
| 16 | 34.0 | 5.9 | 16.2 | 5.0 | 3.0 | -- | -- | -- | 1.4 | Bal. |
| 17 | 36.7 | 5.2 | 16.1 | 5.2 | 1.0 | 2.3 | -- | -- | 1.4 | Bal. |
| 18 | 34.3 | 10.2 | 15.8 | 4.9 | 3.1 | -- | -- | -- | 1.6 | Bal. |
| 19 | 34.4 | 5.9 | 10.2 | 5.3 | 3.3 | -- | — | -- | 1.3 | Bal. |
| 20 | 34.5 | 6.3 | 19.5 | 5.0 | 1.8 | 1.3 | -- | -- | 1.5 | Bal. |
| 21 | 34.2 | 6.2 | 15.8 | 2.5 | — | 3.2 | -- | -- | 1.2 | Bal. |
| 22 | 34.6 | 5.8 | 15.7 | 8.1 | 3.3 | -- | -- | -- | 1.3 | Bal. |
| 23 | 34.4 | 5.7 | 16.3 | 11.8 | 1.6 | 1.7 | -- | -- | 1.4 | Bal. |
| 24 | 34.5 | 6.0 | 15.9 | 4.9 | 0.5 | -- | -- | -- | 1.2 | Bal. |

COM: Comparative Bal.: Balance

TABLE 4

| Sample No. | Hydrogen Absorption Speed (wt%/SEC) | Hydrogen Discharge Speed (wt%/SEC) | Electric Discharge Capacity (mAh/g) | Electric Charge and Discharge Cycles (time) |
|---|---|---|---|---|
| 13 | 0.22 | 0.23 | 418 | 2 |
| COM-1 | 0.08 | 0.07 | 360 | 20 |
| 14 | 0.19 | 0.18 | 387 | 1 |
| 15 | 0.19 | 0.20 | 403 | 1 |
| 16 | 0.20 | 0.21 | 420 | 2 |
| 17 | 0.21 | 0.18 | 419 | 2 |
| 18 | 0.19 | 0.19 | 422 | 2 |
| 19 | 0.21 | 0.18 | 418 | 2 |
| 20 | 0.20 | 0.19 | 419 | 1 |
| 21 | 0.21 | 0.20 | 411 | 2 |
| 22 | 0.18 | 0.18 | 420 | 1 |
| 23 | 0.19 | 0.19 | 423 | 1 |
| 24 | 0.17 | 0.16 | 424 | 4 |

**COM: Comparative**

**TABLE 5**

| Sample No. | Component Composition (wt%) | | | | | | | | | |
|---|---|---|---|---|---|---|---|---|---|---|
| | Zr | Ti | Mn | V | Rare Earth Elements | | | | Hf | Ni+ impurity |
| | | | | | La | Ce | Pr | Nd | | |
| 25 | 34.4 | 5.9 | 16.2 | 5.1 | 2.0 | -- | -- | -- | 1.4 | Bal. |
| 26 | 34.4 | 6.1 | 16.1 | 5.2 | 4.6 | -- | -- | -- | 1.6 | Bal. |
| 27 | 34.3 | 6.2 | 16.0 | 4.9 | -- | 1.5 | -- | -- | 1.3 | Bal. |
| 28 | 34.2 | 5.7 | 15.7 | 4.8 | -- | 4.8 | -- | -- | 1.5 | Bal. |
| 29 | 34.1 | 6.1 | 15.8 | 5.0 | 3.2 | -- | -- | -- | 0.12 | Bal. |
| 30 | 34.6 | 6.0 | 16.1 | 5.3 | -- | 2.9 | -- | -- | 0.63 | Bal. |
| 31 | 34.3 | 6.0 | 16.0 | 5.2 | 1.6 | 1.5 | -- | -- | 0.59 | Bal. |
| 32 | 34.2 | 6.1 | 15.9 | 4.9 | 3.1 | -- | -- | -- | 1.9 | Bal. |
| COM-2 | 21.0 | 12.6 | 24.9 | Cr:23.5 | -- | 3.3 | -- | -- | -- | Bal. |
| 33 | 25.2 | 6.1 | 16.1 | 5.1 | 2.1 | 0.8 | -- | -- | -- | Bal. |
| 34 | 30.1 | 6.2 | 15.8 | 5.0 | -- | 3.3 | -- | -- | -- | Bal. |
| 35 | 34.3 | 5.6 | 16.0 | 4.9 | 3 | -- | -- | -- | -- | Bal. |
| 36 | 36.9 | 5.1 | 16.2 | 5.0 | 1.6 | 1.4 | -- | -- | -- | Bal. |

COM: Comparative    Bal.: Balance

TABLE 6

| Sample No. | Hydrogen Absorption Speed (wt%/SEC) | Hydrogen Discharge Speed (wt%/SEC) | Electric Discharge Capacity (mAh/g) | Electric Charge and Discharge Cycles (time) |
|---|---|---|---|---|
| 25 | 0.20 | 0.19 | 423 | 3 |
| 26 | 0.25 | 0.24 | 415 | 1 |
| 27 | 0.19 | 0.20 | 422 | 3 |
| 28 | 0.25 | 0.24 | 413 | 1 |
| 29 | 0.20 | 0.21 | 421 | 1 |
| 30 | 0.20 | 0.19 | 420 | 1 |
| 31 | 0.21 | 0.19 | 419 | 2 |
| 32 | 0.20 | 0.20 | 421 | 1 |
| COM-2 | 0.08 | 0.08 | 360 | 17 |
| 33 | 0.20 | 0.20 | 383 | 2 |
| 34 | 0.20 | 0.19 | 401 | 2 |
| 35 | 0.21 | 0.20 | 410 | 2 |
| 36 | 0.19 | 0.19 | 411 | 2 |

**COM: Comparative**

TABLE 7

| Sample No. | Component Composition (wt%) | | | | | | | | | |
|---|---|---|---|---|---|---|---|---|---|---|
| | Zr | Ti | Mn | V | Rare Earth Elements | | | | Hf | Ni+ impurity |
| | | | | | La | Ce | Pr | Nd | | |
| 37 | 40.2 | 5.7 | 16.0 | 5.1 | 3.2 | -- | -- | -- | -- | Bal. |
| 38 | 44.8 | 5.6 | 15.9 | 4.8 | 2.3 | 0.5 | -- | -- | -- | Bal. |
| 39 | 35.0 | 1.1 | 15.8 | 5.0 | -- | 3 | -- | -- | -- | Bal. |
| 40 | 34.7 | 4.1 | 16.0 | 4.9 | 1.7 | 1.6 | -- | -- | -- | Bal. |
| 41 | 34.4 | 9.8 | 15.9 | 5.1 | 2.9 | -- | -- | -- | -- | Bal. |
| 42 | 34.6 | 11.9 | 16.1 | 4.8 | -- | 3.1 | -- | -- | -- | Bal. |
| 43 | 34.9 | 5.9 | 10.4 | 4.7 | 2.8 | -- | -- | -- | -- | Bal. |
| 44 | 34.1 | 6.2 | 17.9 | 4.9 | -- | 3.1 | -- | -- | -- | Bal. |
| 45 | 35.3 | 5.8 | 19.8 | 5.1 | -- | 3.5 | -- | -- | -- | Bal. |
| 46 | 34.6 | 6.0 | 16.2 | 2.8 | 1.6 | 1.3 | -- | -- | -- | Bal. |
| 47 | 34.5 | 6.2 | 15.9 | 8.0 | 2.9 | 0.3 | -- | -- | -- | Bal. |
| 48 | 34.7 | 6.1 | 16.0 | 11.9 | 3.1 | -- | -- | -- | -- | Bal. |
| 49 | 34.2 | 5.8 | 16.0 | 5.2 | 0.54 | -- | -- | -- | -- | Bal. |

**Bal.: Balance**

TABLE 8

| Sample No. | Hydrogen Absorption Speed (wt%/SEC) | Hydrogen Discharge Speed (wt%/SEC) | Electric Discharge Capacity (mAh/g) | Electric Charge and Discharge Cycles (time) |
|---|---|---|---|---|
| 37 | 0.21 | 0.20 | 411 | 2 |
| 38 | 0.19 | 0.20 | 401 | 2 |
| 39 | 0.21 | 0.20 | 394 | 2 |
| 40 | 0.20 | 0.21 | 407 | 2 |
| 41 | 0.21 | 0.21 | 405 | 2 |
| 42 | 0.19 | 0.19 | 393 | 2 |
| 43 | 0.19 | 0.19 | 400 | 2 |
| 44 | 0.19 | 0.20 | 406 | 2 |
| 45 | 0.18 | 0.19 | 400 | 2 |
| 46 | 0.21 | 0.20 | 400 | 2 |
| 47 | 0.20 | 0.19 | 413 | 2 |
| 48 | 0.20 | 0.21 | 395 | 2 |
| 49 | 0.17 | 0.18 | 416 | 4 |

TABLE 9

| Sample No. | Component Composition (wt%) | | | | | | | | | |
|---|---|---|---|---|---|---|---|---|---|---|
| | Zr | Ti | Mn | V | Rare Earth Elements | | | | Hf | Ni+ impurity |
| | | | | | La | Ce | Pr | Nd | | |
| 50 | 34.1 | 5.9 | 15.9 | 4.9 | -- | 0.53 | -- | -- | -- | Bal. |
| 51 | 34.4 | 5.7 | 15.8 | 4.7 | 2 | -- | -- | -- | -- | Bal. |
| 52 | 34.8 | 5.8 | 15.9 | 4.8 | -- | 4.9 | -- | -- | -- | Bal. |
| 53 | 35.7 | 6.2 | 16.3 | 5.1 | 2.4 | 2.6 | -- | -- | -- | Bal. |
| COM-3 | 23.8 | 12.5 | 24.1 | Cr:22.9 | 3.8 | -- | -- | -- | -- | Bal. |
| 54 | 25.0 | 6.2 | 15.9 | 4.9 | 1.5 | 1.7 | -- | -- | 1.5 | Bal. |
| 55 | 29.9 | 6.1 | 15.9 | 5.0 | 1.6 | 1.6 | -- | -- | 1.6 | Bal. |
| 56 | 34.0 | 5.9 | 16.2 | 5.0 | 3.0 | -- | -- | -- | 1.4 | Bal. |
| 57 | 36.7 | 5.2 | 16.1 | 5.2 | 1.0 | 2.3 | -- | -- | 1.4 | Bal. |
| 58 | 40.0 | 5.9 | 16.0 | 4.9 | 2.0 | 1.2 | -- | -- | 1.5 | Bal. |
| 59 | 44.8 | 5.5 | 15.8 | 4.8 | -- | 2.9 | -- | -- | 1.2 | Bal. |
| 60 | 34.1 | 1.0 | 16.1 | 5.0 | 1.7 | 1.5 | -- | -- | 1.4 | Bal. |

**COM: Comparative** **Bal.: Balance**

**TABLE 10**

| Sample No. | Hydrogen Absorption Speed (wt%/SEC) | Hydrogen Discharge Speed (wt%/SEC) | Electric Discharge Capacity (mAh/g) | Electric Charge and Discharge Cycles (time) |
|---|---|---|---|---|
| 50 | 0.17 | 0.17 | 415 | 4 |
| 51 | 0.19 | 0.20 | 412 | 2 |
| 52 | 0.22 | 0.21 | 407 | 1 |
| 53 | 0.22 | 0.23 | 408 | 1 |
| COM-3 | 0.07 | 0.07 | 349 | 18 |
| 54 | 0.19 | 0.18 | 385 | 2 |
| 55 | 0.19 | 0.20 | 406 | 2 |
| 56 | 0.20 | 0.21 | 414 | 2 |
| 57 | 0.21 | 0.18 | 416 | 2 |
| 58 | 0.20 | 0.21 | 415 | 2 |
| 59 | 0.21 | 0.20 | 405 | 2 |
| 60 | 0.19 | 0.18 | 396 | 2 |

**COM: Comparative**

TABLE 11

| Sample No. | Component Composition (wt%) | | | | | | | | | |
|---|---|---|---|---|---|---|---|---|---|---|
| | Zr | Ti | Mn | V | Rare Earth Elements | | | | Hf | Ni+ impurity |
| | | | | | La | Ce | Pr | Nd | | |
| 61 | 34.2 | 4.1 | 15.9 | 5.0 | 1.6 | 1.6 | -- | -- | 1.3 | Bal. |
| 62 | 34.3 | 10.2 | 15.8 | 4.9 | 3.1 | -- | -- | -- | 1.6 | Bal. |
| 63 | 34.0 | 11.9 | 16.0 | 5.0 | -- | 3.2 | -- | -- | 1.3 | Bal. |
| 64 | 34.4 | 5.9 | 10.2 | 5.3 | 3.3 | -- | -- | -- | 1.3 | Bal. |
| 65 | 34.5 | 6.3 | 19.5 | 5.0 | 1.8 | 1.3 | -- | -- | 1.5 | Bal. |
| 66 | 34.2 | 6.2 | 15.8 | 2.5 | -- | 3.2 | -- | -- | 1.2 | Bal. |
| 67 | 34.6 | 5.8 | 15.7 | 8.1 | 3.3 | -- | -- | -- | 1.3 | Bal. |
| 68 | 34.4 | 5.7 | 16.3 | 11.8 | 1.6 | 1.7 | -- | -- | 1.4 | Bal. |
| 69 | 34.5 | 6.0 | 15.9 | 4.9 | 0.5 | -- | -- | -- | 1.2 | Bal. |
| 70 | 34.4 | 5.9 | 16.2 | 5.1 | 2.0 | -- | -- | -- | 1.4 | Bal. |
| 71 | 34.4 | 6.1 | 16.1 | 5.2 | 4.6 | -- | -- | -- | 1.6 | Bal. |
| 72 | 34.6 | 5.8 | 16.0 | 5.0 | -- | 0.5 | -- | -- | 1.4 | Bal. |

Bal.: Balance

TABLE 12

| Sample No. | Hydrogen Absorption Speed (wt%/SEC) | Hydrogen Discharge Speed (wt%/SEC) | Electric Discharge Capacity (mAh/g) | Electric Charge and Discharge Cycles (time) |
|---|---|---|---|---|
| 61 | 0.18 | 0.19 | 411 | 2 |
| 62 | 0.19 | 0.19 | 407 | 2 |
| 63 | 0.18 | 0.18 | 397 | 2 |
| 64 | 0.21 | 0.18 | 404 | 2 |
| 65 | 0.20 | 0.19 | 406 | 2 |
| 66 | 0.21 | 0.20 | 401 | 2 |
| 67 | 0.18 | 0.18 | 417 | 2 |
| 68 | 0.19 | 0.19 | 399 | 2 |
| 69 | 0.17 | 0.16 | 420 | 4 |
| 70 | 0.20 | 0.19 | 417 | 2 |
| 71 | 0.25 | 0.24 | 413 | 1 |
| 72 | 0.16 | 0.17 | 420 | 4 |

TABLE 13

| Sample No. | Component Composition (wt%) | | | | | | | | | |
|---|---|---|---|---|---|---|---|---|---|---|
| | Zr | Ti | Mn | V | Rare Earth Elements | | | | Hf | Ni+ impurity |
| | | | | | La | Ce | Pr | Nd | | |
| 73 | 34.3 | 6.2 | 16.0 | 4.9 | -- | 1.5 | -- | -- | 1.3 | Bal. |
| 74 | 34.2 | 5.7 | 15.7 | 4.8 | -- | 4.8 | -- | -- | 1.5 | Bal. |
| 75 | 34.1 | 6.1 | 15.8 | 5.0 | 3.2 | -- | -- | -- | 0.12 | Bal. |
| 76 | 34.6 | 6.0 | 16.1 | 5.3 | -- | 2.9 | -- | -- | 0.63 | Bal. |
| 77 | 34.3 | 6.0 | 16.0 | 5.2 | 1.6 | 1.5 | -- | -- | 0.59 | Bal. |
| 78 | 34.2 | 6.1 | 15.9 | 4.9 | 3.1 | -- | -- | -- | 1.9 | Bal. |
| 79 | 34.1 | 5.8 | 16.1 | 4.9 | 1.6 | 1.6 | -- | -- | 2.6 | Bal. |
| 80 | 33.9 | 6.0 | 16.3 | 5.1 | 3.0 | -- | -- | -- | 3.9 | Bal. |
| 81 | 34.7 | 6.1 | 16.0 | 5.0 | 0.13 | 0.26 | 0.03 | 0.09 | 1.0 | Bal. |
| 82 | 34.6 | 5.8 | 15.8 | 5.0 | 0.21 | 0.19 | 0.13 | -- | 1.1 | Bal. |
| 83 | 34.5 | 6.0 | 16.1 | 5.3 | 0.29 | -- | 0.24 | -- | 0.9 | Bal. |
| 84 | 34.2 | 6.1 | 16.1 | 5.0 | 0.43 | 0.05 | 0.10 | 0.39 | 1.2 | Bal. |

Bal.: Balance

TABLE 14

| Sample No. | Hydrogen Absorption Speed (wt%/SEC) | Hydrogen Discharge Speed (wt%/SEC) | Electric Discharge Capacity (mAh/g) | Electric Charge and Discharge Cycles (time) |
|---|---|---|---|---|
| 73 | 0.19 | 0.20 | 418 | 2 |
| 74 | 0.25 | 0.24 | 411 | 1 |
| 75 | 0.20 | 0.21 | 411 | 2 |
| 76 | 0.20 | 0.19 | 414 | 2 |
| 77 | 0.21 | 0.19 | 413 | 2 |
| 78 | 0.20 | 0.20 | 415 | 2 |
| 79 | 0.21 | 0.20 | 414 | 2 |
| 80 | 0.20 | 0.21 | 411 | 2 |
| 81 | 0.18 | 0.16 | 420 | 4 |
| 82 | 0.18 | 0.18 | 420 | 4 |
| 83 | 0.18 | 0.18 | 420 | 4 |
| 84 | 0.20 | 0.17 | 419 | 3 |

TABLE 15

| Sample No. | Component Composition (wt%) | | | | | | | | | |
|---|---|---|---|---|---|---|---|---|---|---|
| | Zr | Ti | Mn | V | Rare Earth Elements | | | | Hf | Ni+ impurity |
| | | | | | La | Ce | Pr | Nd | | |
| 85 | 34.3 | 5.9 | 15.8 | 5.1 | 0.42 | 0.30 | -- | 0.48 | 1.1 | Bal. |
| 86 | 34.6 | 5.3 | 15.8 | 4.9 | 0.56 | -- | -- | 0.45 | 1.1 | Bal. |
| 87 | 34.4 | 6.2 | 15.8 | 4.8 | 1.27 | 0.14 | 0.44 | 0.14 | 1.1 | Bal. |
| 88 | 34.3 | 5.8 | 15.9 | 5.2 | 0.57 | -- | 0.92 | 0.80 | 1.2 | Bal. |
| 89 | 34.5 | 5.9 | 15.9 | 5.0 | -- | 1.53 | 0.51 | -- | 1.1 | Bal. |
| 90 | 34.3 | 6.1 | 16.1 | 4.9 | 3.80 | 0.10 | 0.24 | 0.48 | 1.1 | Bal. |
| 91 | 34.3 | 5.9 | 15.8 | 5.2 | -- | 1.90 | 1.60 | 1.20 | 1.1 | Bal. |
| 92 | 34.5 | 6.1 | 15.8 | 5.3 | -- | 2.60 | -- | 2.10 | 1.0 | Bal. |
| COM-4 | 23.8 | 12.5 | 24.1 | Cr:22.9 | 3.8 | -- | -- | -- | -- | Bal. |
| 93 | 35.2 | 6.0 | 15.9 | 4.8 | 1.7 | 1.5 | -- | -- | -- | Bal. |
| 94 | 34.8 | 5.9 | 16.1 | 4.9 | 1.25 | 0.14 | 0.45 | 0.15 | -- | Bal. |
| 95 | 34.1 | 5.8 | 15.8 | 4.8 | 1.8 | 1.2 | -- | -- | 1.1 | Bal. |
| 96 | 34.9 | 5.7 | 16.2 | 4.9 | 1.26 | 0.15 | 0.15 | 0.15 | 1.2 | Bal. |

**COM: Comparative  Bal.: Balance**

TABLE 16

| Sample No. | Hydrogen Absorption Speed (wt%/SEC) | Hydrogen Discharge Speed (wt%/SEC) | Electric Discharge Capacity (mAh/g) | Electric Charge and Discharge Cycles (time) |
|---|---|---|---|---|
| 85 | 0.20 | 0.19 | 419 | 3 |
| 86 | 0.19 | 0.18 | 419 | 3 |
| 87 | 0.19 | 0.19 | 416 | 2 |
| 88 | 0.20 | 0.20 | 417 | 2 |
| 89 | 0.21 | 0.19 | 417 | 2 |
| 90 | 0.23 | 0.23 | 411 | 1 |
| 91 | 0.22 | 0.23 | 412 | 1 |
| 92 | 0.22 | 0.22 | 412 | 1 |
| COM-4 | 0.07 | 0.07 | 349 | 18 |
| 93 | 0.21 | 0.20 | 419 | 2 |
| 94 | 0.20 | 0.21 | 420 | 2 |
| 95 | 0.21 | 0.20 | 419 | 2 |
| 96 | 0.21 | 0.21 | 419 | 2 |

COM: Comparative

## Claims

1. A hydrogen occluding alloy having a composition comprising by wt%:

   25 to 45 % of Zr,
   1 to 12 % of Ti,
   10 to 20 % of Mn,
   2 to 12 % of V,
   0,5 to 5 % of at least one rare earth element,
   unavoidable impurities,
   optionally 0,1 to 4 % of Hf
   and balance Ni, wherein the amount of Ni is at least 25 %,

   having a structure comprising main phase made of Zr-Ni-Mn based alloy and having cracks and a phase made of a regenerated rare earth element-Ni type alloy expansively distributed along said cracks.

2. A hydrogen occluding alloy as recited in claim 1, wherein said composition comprises by wt%:

   25 to 40% of Zr, 4 to 12% of Ti,
   10 to 20% of Mn, 2 to 8% of V,
   0.5 to 5% of at least one rare earth element,

   unavoidable impurities, and at least 25% of Ni

3. A hydrogen occluding alloy as recited in claim 1, wherein said composition consists essentially of, by wt%:

   30 to 37% of Zr, 5 to 10% of Ti,
   14 to 18% of Mn, 3 to 6% of V,
   2 to 4 % of La and/or Ce,
   unavoidable impurities,
   and at least 25% of Ni.

4. A hydrogen occluding alloy as recited in claims 1, 2 or 3, wherein said composition further comprises 0.1 - 2.0 weight percent of Hf.

5. A hydrogen occluding alloy as recited in claims 1, 2 or 3, wherein said composition further comprises 1.0 - 1.7 weight percent of Hf.

6. A hydrogen occluding alloy as recited in claims 1 to 5, wherein said at least one rare earth element comprises La and/or Ce.

7. A process for producing a hydrogen occluding alloy, comprising:

   (a) preparing an alloy ingot having a composition comprising, by weight:

      25 to 45% of Zr, 1 to 12% of Ti,
      10 to 20% of Mn, 2 to 12% of V,
      0.5% to 5% of at least one rare earth element,
      unavoidable impurities

      and at least 25% of Ni,

   (b) homogenizing said ingot in a non-oxidizing atmosphere,
   (c) hydrogenating said ingot in a hydrogen atmosphere at a temperature in the range of from 400°C to 700°C, and
   (d) dehydrogenating said ingot at a temperature in the range of from 600°C to 700°C.

8. A process as recited in claim 7, wherein said composition is a composition as claimed in any of claims 2 to 6.

9. A hydrogen occluding alloy formed according to a process comprising:

(a) preparing an alloy ingot having a composition comprising, by weight:

25 to 45% of Zr, 1 to 12% of Ti,
10 to 20% of Mn, 2 to 12% of V,
0.5% to 5% of at least one rare earth element,
unavoidable impurities,

and at least 25% of Ni,
(b) homogenizing said ingot in a non-oxidizing atmosphere to provide a structure including Zr-Ni-Mn based alloy and rare earth-Ni type alloy,
(c) hydrogenating said ingot in a hydrogen atmosphere at a temperature in the range of from 400°C to 700°C, thereby forming cracks in said Zr-Ni-Mn based alloy and converting at least some of said rare earth-Ni type alloy to rare earth element hydride, and
(d) dehydrogenating said ingot at a temperature in the range of from 600°C to 700°C, thereby regenerating and fluidizing a rare earth element-Ni type alloy which flows along said cracks.

10. An electrode for a Ni-hydrogen battery, said electrode comprising a hydrogen occluding alloy as recited in any of claims 1 to 6, and 9.

**Patentansprüche**

1. Wasserstoff-Einlagerungslegierung mit einer Zusammensetzung, welche in Gew.-% umfaßt:

25 bis 45 % Zr,
1 bis 12 % Ti,
10 bis 20 % Mn,
2 bis 12 % V,
0,5 bis 5 % mindestens eines Selten-Erden-Elements,

unvermeidbare Verunreinigungen,
gegebenenfalls 0,1 bis 4 % Hf,
und der Rest Ni, wobei die Menge an Ni mindestens 25 % beträgt,
mit einer Struktur, welche eine Hauptphase aus einer Legierung auf Zr-Ni-Mn-Basis, welche Sprünge aufweist, und eine Phase aus einer regenerierten Legierung vom Selten-Erden-Element-Ni-Typ umfaßt, welche expansiv entlang dieser Sprünge verteilt ist.

2. Wasserstoff-Einlagerungslegierung wie in Anspruch 1 angegeben, wobei diese Zusammensetzung in Gew.-% umfaßt:

25 bis 40 % Zr, 4 bis 12 % Ti,
10 bis 20 % Mn, 2 bis 8% V,
0,5 bis 5 % mindestens eines Selten-Erden-Elements, unvermeidbare Verunreinigungen und mindestens 25 % Ni.

3. Wasserstoff-Einlagerungslegierung wie in Anspruch 1 angegeben, wobei diese Zusammensetzung im wesentlichen in Gew.-% besteht aus:

30 bis 37 % Zr, 5 bis 10 % Ti
14 bis 18 % Mn, 3 bis 6% V,
2 bis 4 % La und/oder Ce,
unvermeidbare Verunreinigungen

und mindestens 25 % Ni.

4. Wasserstoff-Einlagerungslegierung wie in den Ansprüchen 1, 2 oder 3 angegeben, wobei diese Zusammensetzung darüber hinaus 0,1 bis 2,0 Gew.-% Hf umfaßt.

**5.** Wasserstoff-Einlagerungslegierung wie in den Ansprüchen 1, 2 oder 3 angegeben, wobei diese Zusammensetzung darüber hinaus 1,0 bis 1,7 Gew.-% Hf umfaßt.

**6.** Wasserstoff-Einlagerungslegierung wie in den Ansprüchen 1 bis 5 angegeben, wobei das mindestens eine Selten-Erden-Element La und/oder Ce umfaßt.

**7.** Verfahren zur Herstellung einer Wasserstoff-Einlagerungslegierung, umfassend:

(a) Herstellung eines Legierungsbarrens mit einer Zusammensetzung, welche nach Gewicht umfaßt:

25 bis 45 % Zr, 1 bis 12 % Ti,
10 bis 20 % Mn, 2 bis 12 % V,
0,5 bis 5 % mindestens eines Selten-Erden-Elements, unvermeidbare Verunreinigungen und mindestens 25 % Ni,

(b) Homogenisieren dieses Barrens in einer nicht-oxidierenden Atmosphäre,

(c) Hydrieren dieses Barrens in einer Wasserstoffatmosphäre bei einer Temperatur im Bereich von 400°C bis 700°C, und

(d) Dehydrieren dieses Barrens bei einer Temperatur im Bereich von 600°C bis 700°C.

**8.** Verfahren wie in Anspruch 7 angegeben, wobei diese Zusammensetzung eine Zusammensetzung wie in einem der Ansprüche 2 bis 6 beansprucht ist.

**9.** Wasserstoff-Einlagerungslegierung, die nach einem Verfahren gebildet wird, welches umfaßt:

(a) Herstellung eines Legierungsbarrens mit einer Zusammensetzung, welche nach Gewicht umfaßt:

25 bis 45 % Zr, 1 bis 12 % Ti,
10 bis 20 % Mn, 2 bis 12 % V,
0,5 bis 5 % mindestens eines Selten-Erden-Elements, unvermeidbare Verunreinigungen und mindestens 25 % Ni,

(b) Homogenisieren dieses Barrens in einer nicht-oxidierenden Atmosphäre zur Bereitstellung einer Struktur, welche eine Legierung auf Zr-Ni-Mn-Basis und eine Legierung vom Selten-Erden-Element-Ni-Typ einschließt,

(c) Hydrieren dieses Barrens in einer Wasserstoffatmosphäre bei einer Temperatur im Bereich von 400°C bis 700°C, wodurch Sprünge in der Legierung auf Zr-Ni-Mn-Basis gebildet werden, und Umwandeln von mindestens etwas dieser Legierung vom Selten-Erden-Element-Ni-Typ in Selten-Erden-Element-Hydrid, und

(d) Dehydrieren dieses Barrens bei einer Temperatur im Bereich von 600°C bis 700°C, wodurch die Legierung vom Selten-Erden-Element-Ni-Typ regeneriert und fluidisiert wird, welche entlang der Sprünge fließt.

**10.** Elektrode für eine Ni-Wasserstoff-Batterie, wobei diese Elektrode eine Wasserstoff-Einlagerungslegierung wie in einem der Ansprüche 1 bis 6 und 9 angegeben umfaßt.

## Revendications

**1.** Alliage à occlusion d'hydrogène comportant une composition comprenant en % en poids :

25 à 45 % de Zr,
1 à 12 % de Ti,
10 à 20 % de Mn,
2 à 12 % de V,

0,5 à 5 % d'au moins un élément de terre rare, des impuretés inévitables,
facultativement 0,1 à 4 % de Hf,

le reste étant formé de Ni, la quantité de Ni étant égale à au moins 25 %,
possédant une structure comprenant une phase principale formée d'un alliage à base Zr-Ni-Mn et possédant des fissures et une phase formée d'un alliage du type élément de terre rare - Ni, régénéré, distribué d'une manière étendue le long desdites fissures.

**2.** Alliage à occlusion d'hydrogène selon la revendication 1, dans lequel ladite composition comprend en % en poids :

25 à 40 % de Zr, 4 à 12 % de Ti,
10 à 20 % de Mn, 2 à 8 % de V,
0,5 à 5 % d'au moins un élément de terre rare, des impuretés inévitables et au moins 25 % de Ni.

**3.** Alliage à occlusion d'hydrogène selon la revendication 1, dans lequel ladite composition comprend en % en poids :

30 à 27 % de Zr, 5 à 10 % de Ti,
14 à 18 % de Mn, 3 à 6 % de V,
2 à 4 % de La et/ou de Ce,
des impuretés inévitables, et
au moins 25 % de Ni.

**4.** Alliage à occlusion d'hydrogène selon la revendication 1, 2 ou 3, dans lequel ladite composition comprend en outre 0,1 - 2,0 pour cent en poids de Hf.

**5.** Alliage à occlusion d'hydrogène selon la revendication 1, 2 ou 3, dans lequel ladite composition comprend en outre 1,0 - 1,7 pour cent en poids de Hf.

**6.** Alliage à occlusion d'hydrogène selon les revendications 1 à 5, dans lequel au moins l'un desdits éléments de terre rare comprend du La et/ou du Ce.

**7.** Procédé pour fabriquer un alliage à occlusion d'hydrogène, consistant à :

(a) préparer un lingot d'alliage possédant une composition comprenant en poids :

25 à 40 % de Zr, 1 à 12 % de Ti,
10 à 20 % de Mn, 2 à 12 % de V,
0,5 à 5 % d'au moins un élément de terre rare,
des impuretés inévitables, et
au moins 25 % de Ni,

(b) homogénéiser ledit lingot dans une atmosphère non oxydante,
(c) hydrogéner ledit lingot dans une atmosphère d'hydrogène à une température située dans la gamme comprise entre 400°C et 700°C; et
(d) déshydrogéner ledit lingot à une température dans la gamme comprise entre 600°C et 700°C.

**8.** Procédé selon la revendication 7, selon lequel ladite composition est une composition selon l'une quelconque des revendications 2 à 6.

**9.** ALliage à occlusion d'hydrogène selon un procédé consistant à :

(a) préparer un lingot d'alliage possédant une composition comprenant, en poids :

25 à 45 % de Zr, 1 à 12 % de Ti,
10 à 20 % de Mn, 2 à 12 % de V,
0,5 à 5 % d'au moins un élément de terre rare,
des impuretés inévitables, et
au moins 25 % de Ni,

(b) homogénéiser ledit lingot dans une atmosphère non oxydante pour former une structure incluant un alliage à base Zr-Ni-Mn et un alliage du type terre rare - Ni,
(c) hydrogéner ledit lingot dans une atmosphère d'hydrogène à une température dans la gamme comprise entre 400°C et 700°C, de manière à former ainsi des fissures dans ledit alliage à base Zr-Ni-Mn et convertir au moins une partie dudit alliage du type terre rare - Ni en un hydrure d'élément de terre rare;
(d) déshydrogéner ledit lingot à une température dans la gamme comprise entre 600°C et 700°C, de manière à régénérer et en fluidiser un alliage du type élément de terre rare - Ni, qui circule le long desdites fissures.

**10.** Électrode pour une batterie Ni-hydrogène, ladite électrode comprenant un alliage à occlusion d'hydrogène selon l'une quelconque des revendications 1 à 6 et 9.

FIG. 1

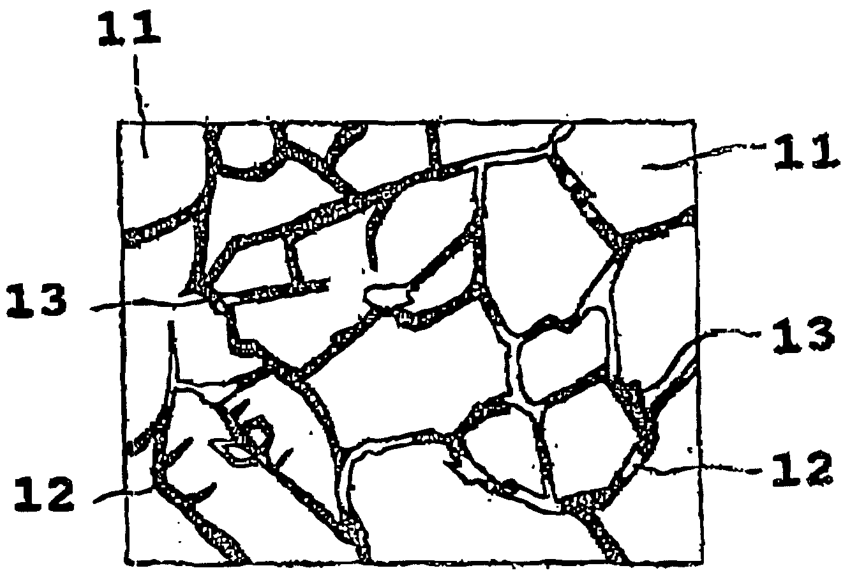

FIG. 2

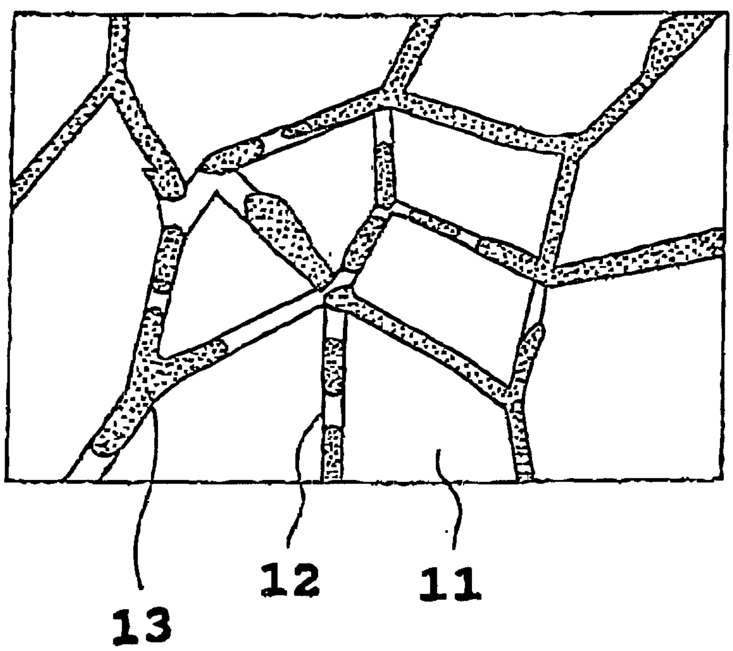

FIG. 3

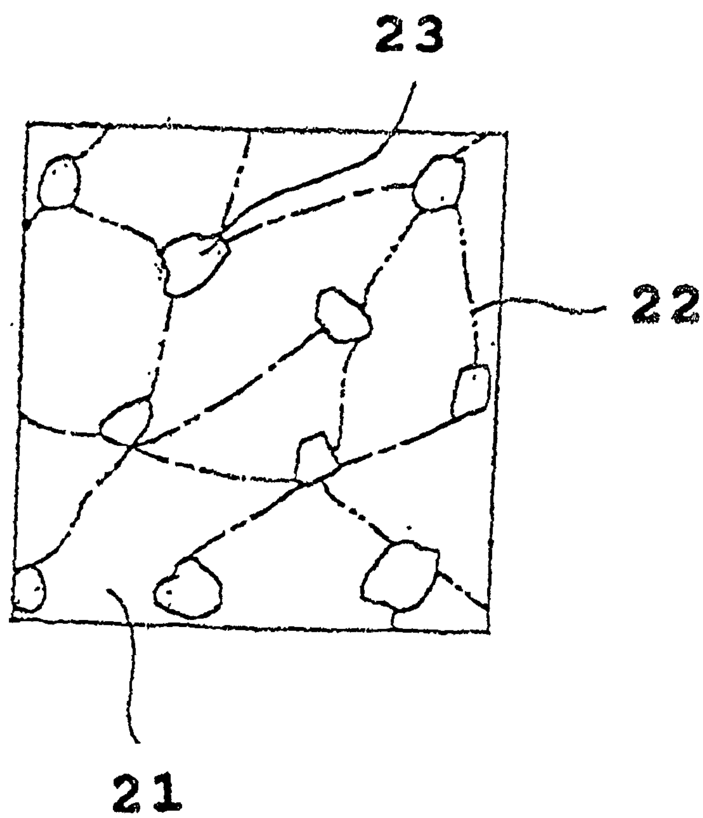

FIG. 4

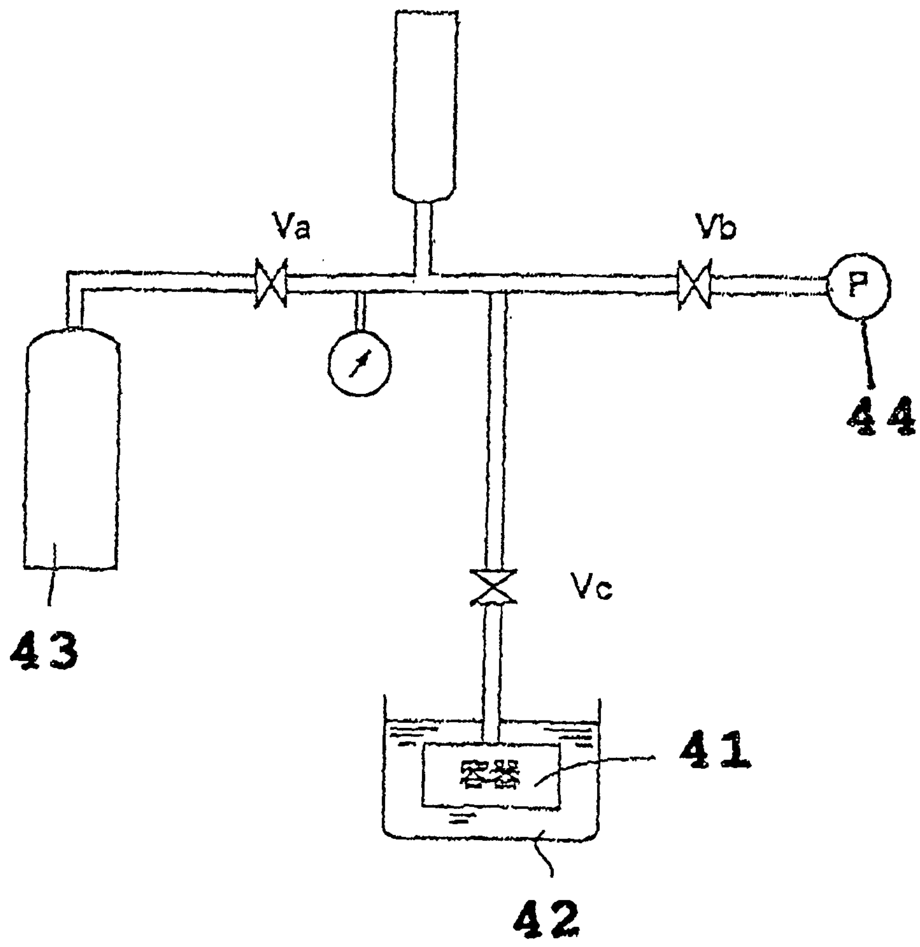

Fig. 5

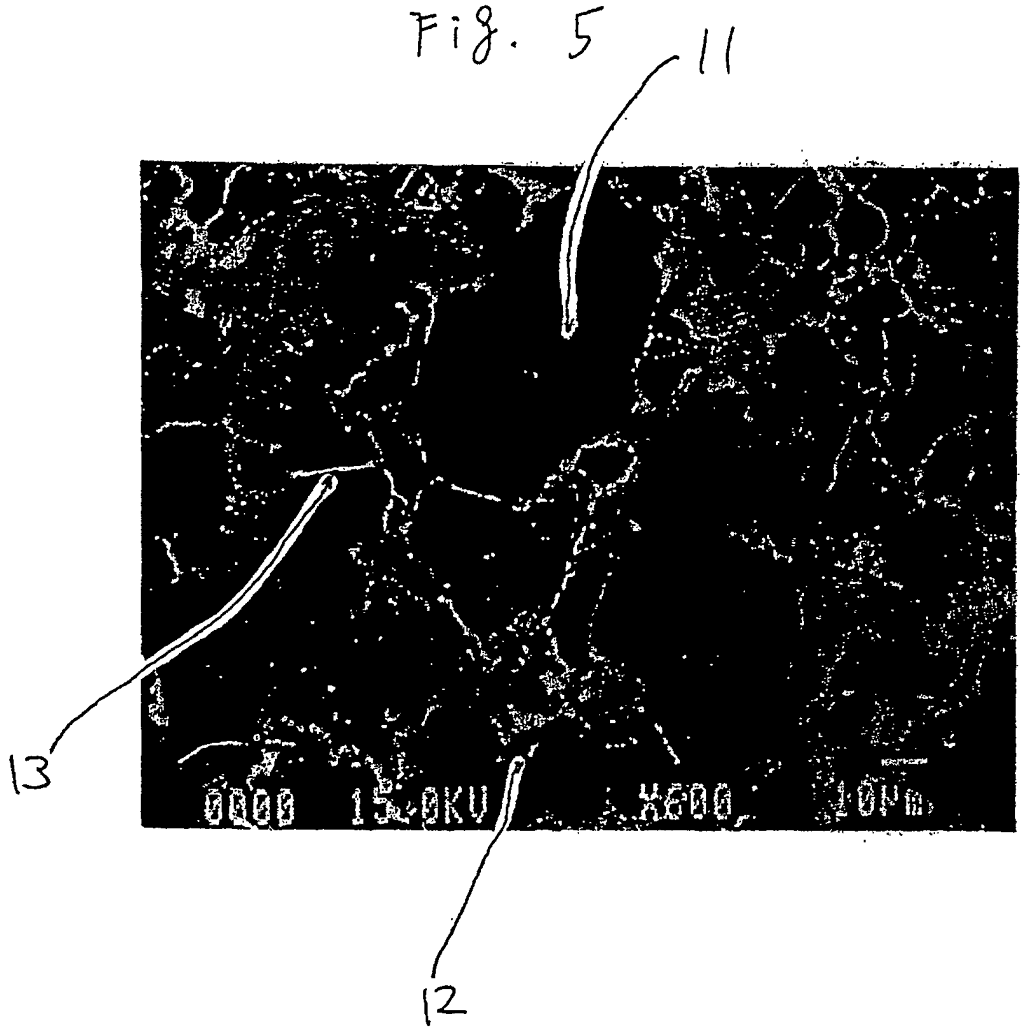

Fig. 5a